# EUROPÄISCHE PATENTANMELDUNG

(11) **EP 0 839 693 A1**
(43) Veröffentlichungstag der Anmeldung: **06.05.1998**
(21) Anmeldenummer: 97118570.7
(22) Anmeldetag: 25.10.1997
(51) Int. Cl.: B60R 21/20

(54) **Airbag-Modul für Kraftfahrzeuglenkräder**

(30) Priorität: 02.11.1996 DE 19645217
(71) Anmelder: TRW Automotive Safety Systems GmbH, 63743 Aschaffenburg (DE)
(72) Erfinder: Miltenberger, Michael, 63820 Elsenfeld (DE)
(74) Vertreter: Fuchs Mehler Weiss

(57) **Zusammenfassung**

Vorgeschlagen wird ein Airbag-Modul für Kraftfahrzeuglenkräder mit einem Gasgenerator (1), einem zusammengefalteten Luftsack (2), einem schüsselartigen Generatorträger (3), einer mit dem Generatorträger (3) randseitig verbundenen und Sollbruchstellen (8) aufweisenden Abdeckung (4) sowie mit einem Halteblech (5) zur Befestigung des Luftsacks (2) am Generatorträger (3), wobei alle genannten Elemente eine einteilige, mit einem Lenkrad verbindbare Baueinheit bilden.

Um das Innenvolumen eines derartigen Airbag-Moduls an verschiedene Volumenbedürfnisse anpassen zu können, ohne daß vom zusammengefalteten Luftsack (2) für die Abdeckung (4) gebildete Widerlager zu verlieren, wird vorgeschlagen, daß zwischen Gasgenerator (1) und zusammengefaltetem Luftsack (2) ein Verdrängungskörper (6, 7) angeordnet ist, der einen vorbestimmten Anteil des zwischen Gasgenerator (1), Generatorträger (3) und Abdeckung (4) für den zusammengefalteten Luftsack (2) zur Verfügung stehenden Volumens ausfüllt.

## Beschreibung

Die Erfindung betrifft ein Airbag-Modul für Kraftfahrzeuglenkräder mit einem Gasgenerator, einem zusammengefalteten Luftsack, einem schüsselartigen Generatorträger, einer mit dem Generatorträger randseitig verbundenen und Sollbruchstellen aufweisenden Abdeckung sowie mit einem Halteblech zur Befestigung des Luftsacks am Generatorträger, wobei alle genannten Elemente eine einteilige, mit einem Lenkrad verbindbare Baueinheit bilden.

Derartige Module werden heute in fast alle Personerkraftwagen serienmäßig eingebaut und müssen daher für eine Großserienproduktion ausgelegt sein. Dazu gehört, daß sie nach Möglichkeit nicht nur für einen Fahrzeug- oder Lenkradtyp verwendbar sind, sondem eine für mehrere Typen passende Einbaugröße aufweisen, damit die Vorteile großer Herstellungsstückzahlen voll genutzt werden können. Die äußeren Abmessungen des Moduls müssen dabei so gewählt werden, daß darin die größten Gasgeneratoren und Luftsäcke untergebracht werden können, die im Rahmen des Anwendungsspektrums der Module vorkommen können. Damit ist eine maßgebliche Randbedingung für die Gestaltung von Airbag-Modulen vorgegeben.

Eine gänzlich andere Randbedingung ergibt sich daraus, daß die Abdeckung selbstverständlich so mit Sollbruchstellen versehen sein muß, daß sich der Luftsack im Benutzungsfalle rasch und ungehindert entfalten kann. Auf der anderen Seite dürfen die Sollbruchstellen während der mindestens zehnjährigen Benutzungsdauer des Kraftfahrzeugs nicht geschwächt werden oder gar unbeabsichtigt brechen. Für die in diesem Zusammenhang erforderlichen Kompromisse sind bereits zahlreiche Vorschläge gemacht worden, die sich in der Praxis auch bewährt haben, weil der unterhalb der Abdeckung zusammengefaltete Luftsack im allgemeinen als Widerlager dient, so daß die Abdeckung bei der üblichen Handhabung des Lenkrades nicht so weit nach innen gedrückt werden kann, daß eine Überlastung der Sollbruchstellen auftreten könnte. Dazu muß der zusammengefaltete Luftsack das verfügbare Volumen ganz ausfüllen.

Diese Voraussetzung entfällt, wenn beispielsweise ein neuer Gasgenerator mit geringerem Bauvolumen eingesetzt werden soll, wenn ein neuartiges Gewebe für den Luftsack weniger Volumen beansprucht oder wenn im Rahmen der Großserienfertigung Airbag-Module mit vorgegebenen äußeren Abmessungen verwendet werden sollen, bei denen das für den Gasgenerator und den zusammengefalteten Luftsack benötigte Volumen zu groß ist. In diesen Fällen fehlt das Widerlager für die Abdeckung und die Sollbruchstelle erfahren eine u.U. zu große Belastung, die bei normalem Gebrauch des Lenkrades zu einem nicht beabsichtigten Bruch führen können und Reparaturarbeiten erforderlich machen, wobei meist nur die Substitution des gesamten Airbag-Moduls in Betracht kommt, weil einzelne Abdeckungen entweder nicht marktüblich sind oder aber mit vorhandenen Werkstattmitteln nicht montiert werden können.

Es besteht somit die Aufgabe, Airbag-Module der eingangs genannten Art so weiterzubilden, daß sie bei gegebenen äußeren Abmessungen für unterschiedlich große Volumenanforderungen brauchbar sind, ohne daß die Abdeckung ihr Widerlager verliert und die Sollbruchstellen überlastet werden.

Zur Lösung dieser Aufgabe wird erfindungsgemäß vorgeschlagen, daß zwischen Generator und zusammengefaltetem Luftsack ein Verdrängungskörper angeordnet ist, der einen vorbestimmten Anteil des zwischen Gasgenerator, Generatorträger und Abdeckung für den zusammengefalteten Luftsack zur Verfügung stehende Volumen ausfüllt.

Ein derartiger Verdrängungskörper hat den Vorteil, daß er leicht herstellbar und einfach an verschiedene Volumenanforderungen anpaßbar wenn das verfügbare freie innere Volumen des im übrigen unveränderten Airbag-Moduls für den Anwendungsfall zu groß ist. Selbstverständlich wird man das gesamte Airbag-Modul verkleinern, wenn dauerhaft und ausnahmslos nur noch ein kleineres Volumen für die Unterbringung des Generators und des Luftsacks benötigt wird. Aber auch danach ergibt sich das eingangs geschilderte Problem, wonach man einerseits auf in Großserie hergestellte Module zurückgreifen möchte, andererseits aber auch unterschiedlichen Anforderungen an das verfügbare Innenvolumen genügen muß, ohne daß eine mechanische Überbelastung der Sollbruchstellen eintreten darf. Mit anderen Worten, auch bei der nähchsten, möglicherweise insgesamt verkleinerten Generation von Airbag-Modulen für Lenkräder läßt sich der Erfindungsgedanke wieder sinnvoll benutzen.

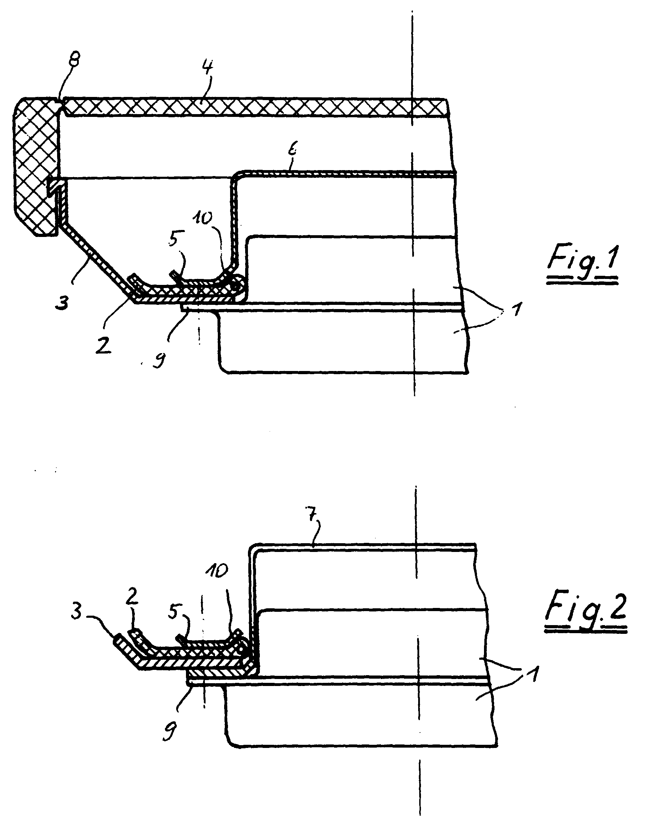

Vorteilhafte Ausgestaltungen des Erfindungsgedankens sind in den Unteransprüchen 2 bis 8 beschrieben. Weitere Einzelheiten werden anhand der in den Figuren 1 und 2 dargestellten Ausführungsbeispiele erläutert. Es zeigen:
- Fig. 1: einen Schnitt durch ein Airbag-Modul, bei dem der Verdrängungskörper einstückig mit dem Halteblech ausgebildet ist,
- Fig. 2: einen Schnitt durch ein Airbag-Modul, bei dem der Verdrängungskörper als gesondertes Bauteil wie der Gasgenerator rückseitig in den Generatorträger eingeschoben ist.

Bei der Ausführungsform gemäß Fig. 1 hat der Gasgenerator 1 einen umlaufenden Flansch 9, über den er mit dem Generatorträger 3 mittels Schrauben, Nieten, oder dergl. verbunden ist. Über dieselben Verbindungsstellen ist gleichzeitig der Luftsack 2 zwischen dem Halteblech 5 und dem Generatorträger 3 eingeklemmt, wobei ein randseitiger Wulst 10 vorgesehen ist, um im Benutzungsfalle ein Herausrutschen des Luftsacks 2 aus der Klemmverbindung zu verhindern.

Die Abdeckung 4 ist randseitig auf den Generatorträger 3 aufgeklipst und mit mindestens einer Sollbruchstelle 8 in Form einer sich linear erstreckenden Materialschwächung versehen. Das Volumen zwischen dem Gasgenerator 1, dem Generatorträger 3 und der Abdeckung 4 steht für den zusammengefalteten Luftsack 2 zur Verfügung, der nur im Bereich der Einspannstelle dargestellt ist, um die Übersicht nicht zu beeinträchtigen. Ein Teil dieses Volumens wird erfindungsgemäß von einem Verdrängungskörper 6 eingenommen, der im Ausführungsbeispiel gemäß Fig. 1 als napfförmiges Bauteil einstückig mit dem Halteblech 5 ausgebildet ist. Dabei ist der napfförmiges Teil selbstverständlich mit Wanddurchbrechungen versehen, damit das im Benutzungsfalle erzeugte Gas in den Luftsack 2 strömen kann. Alternativ kann das napfförmige Bauteil 6 auch eine gitterartige Wandung aufweisen, bei der einzelne Stäbe ein korbartiges Widerlager für den zusammengefalteten Luftsack 2 bilden. Die Darstellung in Fig. 1 zeigt einen solchen Steg im Schnitt.

Bei der Ausführungsform gemäß Fig. 2 hingegen ist ein nicht geschnittener Steg des Verdrängungskörpers 7 gezeigt, wobei letzterer als gesondertes, vom Halteblech 5 unabhängiges Bauteil ausgebildet ist, das wie der Gasgenerator 1 rückseitig in den Generatorträger 3 eingeschoben und randseitig außen am Generatorträger 3 anliegend, mittels Schrauben, Nieten oder dergl. zwischen dem Flansch 9 des Gasgenerators und dem Generatorträger befestigt ist. Im übrigen stimmt die Ausführungsform gemäß Fig. 2 mit der aus Fig. 1 überein.

Es dürfte ohne weitere Erläuterungen klar sein, daß die Verdrängungskörper 6 oder 7 leicht an die jeweiligen Volumenbedingungen anpaßbar und in an sich bekannter Weise aus Blechabschnitten, Drahtgeweben oder Kunststoffen herstellbar sind, wobei lediglich darauf zu achten ist, daß bei der Befestigungsart gemäß Fig. 2 die erforderliche Abdichtung zwischen dem Flansch 9 des Gasgenerators und dem Generatorträger 3 gewährleistet ist.

## Patentansprüche

1. Airbag-Modul für Kraftfahrzeuglenkräder mit einem Gasgenerator (1), einem zusammengefalteten Luftsack (2), einem schüsselartigen Generatorträger (3), einer mit dem Generatorträger (3) randseitig verbundenen und Sollbruchstellen (8) aufweisenden Abdeckung (4) sowie mit einem Halteblech (5) Zur Befestigung des Luftsacks (2) am Generatorträger (3), wobei alle genannten Elemente eine einteilige, mit einem Lenkrad verbindbare Baueinheit bilden, dadurch gekennzeichnet, daß zwischen Gasgenerator (1) und zusammengefaltetem Luftsack (2) ein Verdrängungskörper (6, 7) angeordnet ist, der einen vorbestimmten Anteil des zwischen Gasgenerator (1), Generatorträger (3) und Abdeckung (4) für den zusammengefalteten Luftsack (2) zur Verfügung stehenden Volumens ausfüllt.

2. Airbag-Modul nach Anspruch 1, dadurch gekennzeichnet, daß der Verdrängungskörper aus einem napfförmigen Bauteil (6) mit gelochter oder gitterartiger Wandung besteht, das randseitig mit dem Halteblech (5) verbunden ist.

3. Airbag-Modul nach Anspruch 1, dadurch gekennzeichnet, daß der Verdrängungskörper aus einem napfförmigen Bauteil (6) mit gelochter oder gitterartiger Wandung besteht, das einstückig mit dem Halteblech (5) ausgebildet ist.

4. Airbag-Modul nach Anspruch 3, dadurch gekennzeichnet, daß das napfförmige Bauteil (6) und das Halteblech (5) aus einem Blechabschnitt bestehen, der durch Ausstanzungen und spanlose Umformvorgänge die Form eines hutartigen Korbes erhalten hat.

5. Airbag-Modul nach Anspruch 3, dadurch gekennzeichnet, daß das napfförmige Bauteil (6) und das Halteteil (5) aus einem durch Spritzgießen bzw. Ausstanzen und Tiefziehen hergestellten Kunststoffteil in Form eines hutartigen Korbes bestehen.

6. Airbag-Modul nach Anspruch 1, dadurch gekennzeichnet, daß der Verdrängungskörper aus einem hutartigen Bauteil (7) besteht, das wie der Gasgenerator (1) rückseitig in den Generatorträger (3) eingeschoben und randseitig zwischen Gasgenerator (1) und Generatorträger (3) befestigt ist.

7. Airbag-Modul nach Anspruch 6, dadurch gekennzeichnet, das hutartigen Bauteil (7) aus einem Blechabschnitt besteht, der durch Ausstanzungen und spanlose Umformvorgänge die Form eines hutartigen Korbes erhalten hat.

8. Airbag-Modul nach Anspruch 6, dadurch gekennzeichnet, daß das hutartige Bauteil (7) aus einem durch Spritzgießen bzw. Ausstanzen und Tiefziehen hergestellten Kunststoffteil besteht.
